# EUROPEAN PATENT SPECIFICATION

(11) **EP 4 206 098 B1**
(45) Date of publication and mention of the grant of the patent: **01.10.2025**
(21) Application number: 22215242.3
(22) Date of filing: 21.12.2022
(51) Int. Cl.: B65G 15/10, B65G 15/60, B65G 15/62, G01V 5/00

(54) **TRANSFER DEVICE AND INSPECTION APPARATUS**
ÜBERTRAGUNGSVORRICHTUNG UND INSPEKTIONSVORRICHTUNG
DISPOSITIF DE TRANSFERT ET APPAREIL D'INSPECTION

(30) Priority: 29.12.2021 CN 202111633627
(43) Date of publication of application: 05.07.2023
(73) Proprietor: Nuctech Company Limited, TongFang Building Shuangqinglu Road Haidian District Beijing 100084 (CN)
(72) Inventor: HUANG, Qingping, Beijing, 100084 (CN); HONG, Mingzhi, Beijing, 100084 (CN); WANG, Zinan, Beijing, 100084 (CN); ZHANG, Liguo, Beijing, 100084 (CN)
(74) Representative: Gunzelmann, Rainer

(56) References cited:
- EP-A2- 2 086 334
- JP-A- 2021 047 123
- US-A- 4 078 652
- US-A1- 2018 239 050

## Description

### TECHNICAL FIELD

The present disclosure relates to a field of security inspection, and in particular, to a transfer device and an inspection apparatus.

### BACKGROUND

A CT inspection apparatus is widely applied in a variety of inspections, and has been used for the safety inspection of luggage objects. In the CT inspection apparatus, for example, an X-ray CT generator and a detection device are installed on a circular bearing to perform a rotary motion. An inspection channel is constituted by a space limited by a central hole of the circular bearing.

It is desired to provide an inspection apparatus with an improved performance that may improve an inspection efficiency without increasing a cost.

EP2086334A2 discloses a device for conveying dough portions, including a circulating conveyance means forming a conveyance for in a conveyance direction conveying and supporting the dough portions, a support device for at least partially supporting the conveyance means, wherein the support device is adjustable or interchangeable for setting a relief of the conveyance surface.

US2018239050A1 discloses an imaging system, which includes a conveyor duct including a first wall and an opposing second wall, a gantry coupled to one end of the conveyor duct, an imaging assembly associated with the gantry, and a conveyor assembly coupled to the conveyor duct. The conveyor assembly includes a first rail coupled to the first wall of the conveyor duct and a second rail coupled to the second wall of the conveyor duct, the first rail and the second rail defining a channel therebetween. The imaging system also includes a tray including a base, wherein the conveyor assembly is configured to transport the tray into the gantry, and wherein the base of the tray extends between and below the first rail and the second rail when the conveyor assembly is transporting the tray.

US4078652A discloses a transfer device according to the preamble of claim 1. In particular, the document discloses a machine for conveying similarly shaped articles in a single file, including drive and return conveyors with said drive conveyor having a loading portion and a discharge portion. A plurality of similarly shaped articles are loaded at the loading portion of the drive conveyor. A separator separates the articles in a single file on the drive conveyor and ejects articles from the drive conveyor which vary from the single file. The return conveyor forms an angle relative to the drive conveyor for receiving the ejected articles from the drive conveyor to return the ejected articles on the return conveyor to the drive conveyor.

JP2021047123A discloses an inspection object from overturning during conveyance. The conveyance device includes a belt conveyor, and a band group. The belt conveyor includes a belt. The band group includes a plurality of band parts. A surface of the band part and an outer peripheral surface of the belt constitute two conveyance surfaces moving at the same speed in the same direction by forming an angle of degrees. Namely, the plurality of band parts arranged side by side at an end side on one side of the belt constituting one of the two conveyance surfaces, constitute the other one of the two conveyance surfaces. In the conveyance device, each of the conveyance surfaces are inclined relative to a horizontal plane so that a valley part of the two conveyance surfaces is on a vertically lower side.

### SUMMARY

According to the present invention, a transfer device is set forth in independent claim 1 and an inspection apparatus is set forth in independent claim 7. Preferred embodiments are provided in dependent claims. The invention provides a transfer device configured to transfer an object in a first direction is provided, including: a supporting frame having a supporting surface extending in the first direction, wherein the supporting surface is configured to support a transferred object in a supporting direction; wherein in a second direction, a region of the supporting surface close to a center line is recessed in a direction opposite to the supporting direction with respect to regions of the supporting surface close to two sides, wherein the second direction is a transverse direction of the first direction.

According to the present invention, the transfer device further includes a plurality of flexible members, wherein each flexible member is supported by the supporting surface and is capable of moving around a periphery of the supporting frame, wherein the plurality of flexible members extend on the supporting surface in the first direction and are capable of moving in the first direction.

In an embodiment, the plurality of flexible members are spaced with each other in the second direction on the supporting surface.

In an embodiment, the supporting surface forms an arc surface in the second direction; or wherein the supporting surface comprises a plurality of regions, and an overall cross section of the plurality of regions in the second direction is polygonal.

In an embodiment, each steering wheel guides a corresponding one of the plurality of flexible members to leave the supporting surface in a direction opposite to a normal direction of the supporting surface and travel along the end surface of the supporting frame.

According to the present invention, a plurality of steering wheels are disposed on end surfaces of two end portions of the supporting frame and disposed along a profile in the second direction on the end surfaces of the two end portions of the supporting surface, and wherein on a right side of a lowermost position of the profile of the supporting surface, the steering wheel is disposed to support a corresponding flexible member on a left side of the flexible member; and on a left side of a lowermost position of the profile, the steering wheel is disposed to support a corresponding flexible member on a right side of the flexible member.

According to the present invention, the plurality of steering wheels on the end surface of one of the two end portions of the supporting frame are denser than the plurality of steering wheels on the end surface of the other of the two end portions of the supporting frame.

In an embodiment, the supporting surface comprises a plurality of grooves, each flexible member is disposed in a corresponding one of the plurality of grooves, and at least a portion of each of the plurality of flexible members protrudes outside the supporting surface.

In an embodiment, the transfer device further includes a drive shaft disposed on a side of the supporting frame opposite to the supporting surface, wherein the plurality of flexible members bypass an outer surface of the drive shaft to be driven by the drive shaft.

In a second aspect of the invention, an inspection apparatus is provided, including the transfer device described above.

In an embodiment, the inspection apparatus further includes an inspection device, wherein the transfer device penetrates the inspection device, so that the inspection device rotates around at least a portion of the transfer device so as to obtain a three-dimensional information of an inspected object on the transfer device.

### BRIEF DESCRIPTION OF THE DRAWINGS

One or more embodiments of the present disclosure will now be described by way of examples only with reference to the accompanying drawings, in which:
FIG. 1 shows a schematic diagram of an inspection apparatus according to an embodiment of the present disclosure, in which a left portion is a schematic diagram of an end surface, and a right portion is a schematic diagram of a side surface.
FIG. 2 shows a schematic diagram of a cross section of a transfer device according to an embodiment of the present disclosure.
FIG. 3 shows a schematic diagram of a cross section of a transfer device according to another embodiment of the present disclosure.
FIG. 4 shows a partial enlarged schematic diagram of an end surface of a transfer device according to an embodiment of the present disclosure.
FIG. 5 shows a schematic diagram of an inspection apparatus according to an embodiment of the present disclosure, in which a left portion is a schematic diagram of an end surface, and a right portion is a partial enlarged schematic diagram of the end surface.
FIG. 6 shows a top view of a support surface of a transfer device according to an embodiment of the present disclosure.

### DETAILED DESCRIPTION OF EMBODIMENTS

In the following embodiments, terms "first", "second", "third", etc. are used to distinguish different components, rather than sequencing or representing primary and secondary. Terms "upper", "lower", etc. indicating orientations in the specification do not indicate absolute orientations, but relative positions between components.

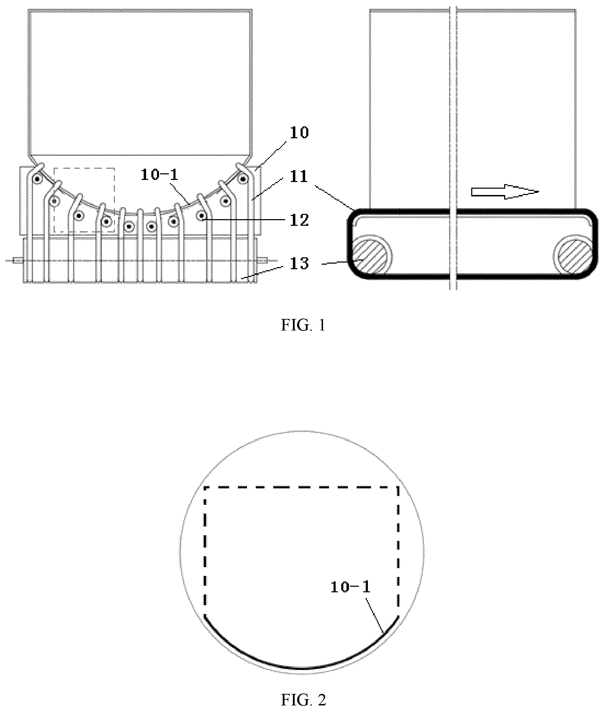

As shown in FIG. 1, the embodiments of the present disclosure provide a transfer device, which transfers an object in a first direction (e.g., from left to right as shown by an arrow in FIG. 1). The transfer device includes a supporting frame 10 having a supporting surface 10-1 extending in the first direction, and the supporting surface 10-1 is used to support a transferred object in a supporting direction. In the embodiment, in a second direction (in the left portion of FIG. 1, the first direction may be from left to right or from right to left), a region of the supporting surface 10-1 close to a center line is recessed in a direction opposite to the supporting direction with respect to regions of the supporting surface 10-1 close to two sides, or may be considered to be recessed downward. In the embodiment, the second direction is a transverse direction of the first direction. Since the supporting surface 10-1 has a recessed structure, or may be considered to have a recessed portion or recessed cavity, the transfer device of the embodiment allows more objects to be supported on the supporting surface 10-1 for transfer.

In the embodiment shown in FIG. 1, a cross section of the supporting surface 10-1 is drawn as an arc. In FIG. 1, a middle region of the supporting surface 10-1 is recessed, and regions on the two sides of the supporting surface 10-1 are higher than the region close to the center line; in other words, the region close to the center line of the supporting surface 10-1 is lower than the regions on the two sides of the supporting surface 10-1.

FIG. 2 shows an embodiment of the supporting surface 10-1. The supporting surface 10-1 forms as a circular arc shape. Since the middle region is recessed, a recess of the supporting surface 10-1 allows more objects to be supported on the supporting surface 10-1 with respect to a flat supporting surface 10-1 when the objects are transferred. In addition, due to the circular arc shape of the supporting surface 10-1, the transferred objects tend to concentrate in the middle, thus the transferred objects are not easy to fall off from the supporting surface 10-1. For example, in the inspection apparatus, due to a recessed arrangement, the inspection apparatus may inspect more objects each time without increasing an entire volume.

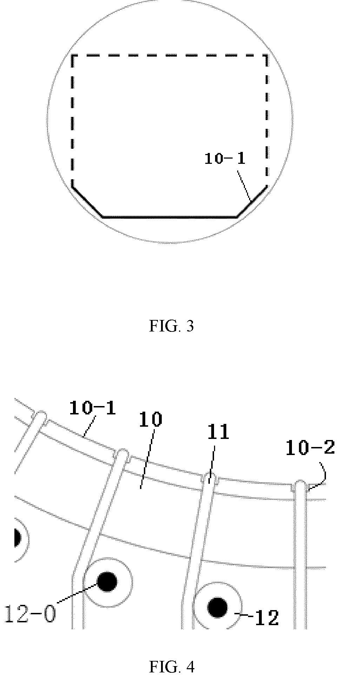

FIG. 3 shows a schematic diagram of the supporting surface 10-1 according to another embodiment of the present disclosure. In the embodiment, the supporting surface 10-1 includes a plurality of regions, and an overall cross section of the plurality of regions is polygonal in the second direction. As shown in FIG. 3, the supporting surface 10-1 is constituted by inclined surfaces on two sides and a flat surface in the middle. In the embodiment, the surface having a lower position is close to the middle region, and the inclined surfaces are close to the two sides of the supporting surface 10-1, that is, supporting surfaces 10-1 inclined from a higher position to a lower position. Since the supporting surface 10-1 has a recessed shape, the supporting surface 10-1 in the embodiment has an increased volume than a flat supporting form.

In other embodiments of the present disclosure, the supporting surface 10-1 may also have other forms. For example, the supporting surface 10-1 is polygonal, and other shapes may be obtained according to the embodiments of the present disclosure.

In the embodiments of the present disclosure, as shown in FIG. 1, the transfer device also includes a plurality of flexible members 11, each flexible member 11 is supported by the supporting surface 10-1, and is capable of moving around a periphery of the supporting frame 10. That is, each flexible member 11 moves at least on the supporting surface 10-1, or each flexible member 11 moves through the supporting surface 10-1, so as to drive the objects on the supporting surface 10-1 to move. In the embodiment, the supporting frame 10 or the supporting surface 10-1 of the supporting frame 10 itself does not move, and the objects on the supporting surface 10-1 move on the supporting surface 10-1 through the drive of the flexible member 11. In the embodiment, the transferred object may press on the flexible member 11 when being placed on the supporting surface 10-1. Since a friction force exists between the flexible member 11 and the object, the flexible member 11 may drive the object to move together when the flexible member 11 is moving. In the embodiment, it is advantageous that the supporting surface 10-1 is a smooth surface. For example, the supporting surface 10-1 is a smooth metal surface; the supporting surface 10-1 is a plastic surface; the supporting surface 10-1 is a ceramic surface; or the supporting surface 10-1 may be a surface of other materials.

In an embodiment, rollers or balls may be provided on the supporting surface 10-1, and top portions of the rollers or balls may be used to support objects, so that the objects may be moved by the flexible member 11 when the rollers or balls rotate. The rollers and balls may further reduce a resistance to a movement of the objects. In the embodiment, the rollers or balls are disposed between the flexible members 11.

In an embodiment, the flexible member 11 is a rubber member, or other flexible ropes or cables. In the embodiment shown in FIG. 1, each flexible member 11 may be supported on the supporting surface 10-1 and move from an inside of a paper surface toward an outside of the paper surface. In another embodiment, the flexible member 11 may be supported on the supporting surface 10-1 and move from an outside of a paper surface toward an inside of the paper surface. In another embodiment, the flexible member 11 may be supported on the supporting surface 10-1 and may reciprocate on the supporting surface 10-1 as required.

According to an example, which is not part of the present invention but contains information useful for understanding the invention, the plurality of flexible members 11 are substantially uniformly disposed on the supporting surface 10-1, that is, the plurality of flexible members 11 are spaced by a substantially equal distance. According to an example, which is not part of the present invention but contains information useful for understanding the invention, the plurality of flexible members 11 may be disposed on the supporting surface 10-1 in parallel. In another embodiment of the present disclosure, the plurality of flexible members 11 are spaced by different distances. In another embodiment of the present disclosure, the plurality of flexible members 11 may be disposed on the supporting surface 10-1 in non-parallel with each other.

For example, in the embodiment shown in FIG. 1, the plurality of flexible members 11 are distributed on the arc-shaped supporting surface 10-1 in the second direction (the transverse direction of the transfer direction). The plurality of flexible members 11 may be uniformly distributed on the supporting surface 10-1.

According to an example, which is not part of the present invention but contains information useful for understanding the invention, the plurality of flexible members 11 are disposed on the supporting surface 10-1 in parallel with each other, and the flexible members 11 close to the middle portion of the supporting surface 10-1 are distributed more densely, while the flexible members 11 close to the two sides of the supporting surface 10-1 are distributed more sparsely, which is beneficial to drive the movement of the objects. However, this is not necessary.

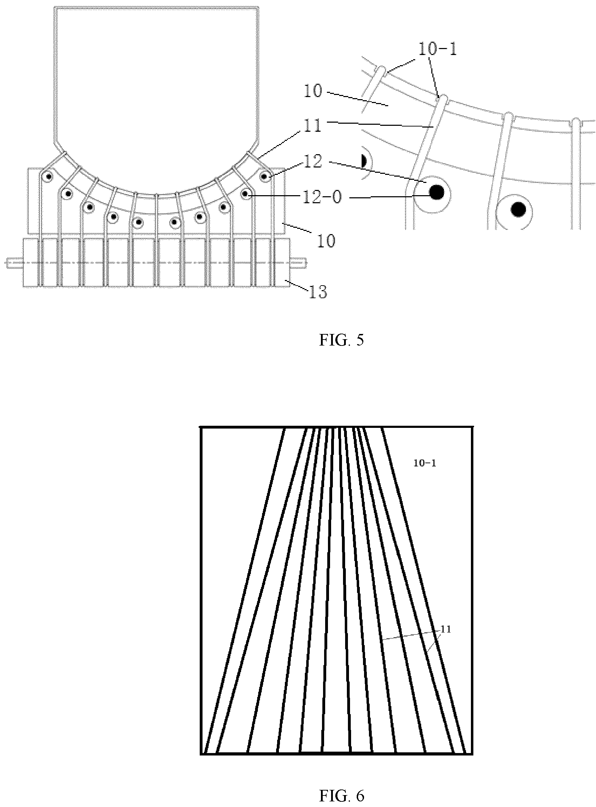

In the embodiment shown in FIG. 6, the plurality of flexible members 11 tend to concentrate in the transfer direction. As shown in FIG. 6, the plurality of flexible members 11 at one end (an upper end of the paper surface in the drawing) of the supporting surface 10-1 are more densely distributed than the plurality of flexible members 11 at the other end (a lower end of the paper surface in FIG. 6) of the supporting surface 10-1. Such arrangement enables the object to subject to a friction force of the flexible member 11 in the transfer direction, and to also subject to a lateral friction force applied by the flexible member 11 when the object is transferred. Specifically, the flexible member 11 on the left side of the supporting surface 10-1 in FIG. 6 applies a rightward friction component, and the flexible member 11 on the right side of the supporting surface 10-1 in FIG. 6 applies a leftward friction component. According to the embodiment of FIG. 6, during a process of a transferred object being transferred on the supporting surface 10-1 in the transfer direction, the object may be driven by the flexible member 11 to move toward the center line of the supporting surface 10-1, or the object may be subjected to a force toward the center line, so that the object is not easy to fall off from the supporting surface 10-1.

According to the present invention, a plurality of steering wheels 12 are respectively disposed on end surfaces of the two end portions of the supporting frame 10. Each steering wheel 12 is used to guide a corresponding flexible member 11 to leave the supporting surface 10-1 in a normal direction of the supporting surface 10-1 and travel along the end surface of the supporting frame 10.

FIG. 4 shows a partial enlarged schematic diagram of the end surface of the transfer device. If the supporting frame 10 is split into two halves from the middle, FIG. 4 shows a portion of a left half of the end portion of the supporting frame 10. Under a support of the steering wheel, the flexible member 11 leaves the supporting surface 10-1 in the normal direction of the supporting surface and moves downward along the end surface. After moving to bypass a partial arc surface of the steering wheel, the flexible member 11 moves downward in a vertical direction. In other words, the steering wheel is disposed to allow the flexible member 11 to be changed to leave the supporting surface 10-1 in the normal direction of the supporting surface 10-1 from the first direction in which the flexible member 11 travels along the supporting surface 10-1, and to travel on the end surface of the supporting frame 10. According to the present invention, a plurality of steering wheels 12 are disposed along a profile of a cross section of the supporting surface 10-1 in the second direction. As shown in FIG. 4, the plurality of steering wheels 12 are disposed along an arc of the cross section. Each steering wheel 12 corresponds to a flexible member 11. According to the present invention as shown in FIG. 1 and FIG. 4, on a right side of a lowermost position of the profile of the cross section, the steering wheel 12 is disposed to support the flexible member 11 on the left side of the flexible member 11; and on a left side of a lowermost position of the profile of the cross section, the steering wheel 12 is disposed to support the flexible member 11 on the right side of the flexible member 11.

In the embodiment shown in FIG. 3, the steering wheel 12 is uniformly disposed below a flat portion in the middle of the supporting surface. Near inclined portions on the two sides of the supporting surface, the steering wheel 12 enable the flexible member 11 to travel on the end portion of the supporting frame 10 in a direction perpendicular to the inclined surface.

In the embodiments shown in FIG. 1 and FIG. 4, the supporting surface 10-1 includes a plurality of grooves 10-2, each flexible member 11 is disposed in one of the plurality of grooves 10-2, and at least a portion of each flexible member 11 protrudes outside the supporting surface 10-1. It is advantageous to provide the groove 10-2, so that the flexible member 11 may be stably disposed in the groove 10-2 and travel along the groove 10-2. At the same time, since a portion of the flexible member 11 protrudes outside the groove 10-2, the flexible member 11 may be used to support the objects on the supporting surface 10-1 and thus the objects may be driven to travel by the friction force. Due to the groove 10-2, a travel path of the flexible member 11 on the supporting surface 10-1 is fixed, and the flexible member 11 is stably transferred under a support of the steering wheel 12.

As shown in FIG. 5, the steering wheel 12 may move relative to the fixed shaft 12-0 within a certain range, so that a position of the steering wheel 12 may be adjusted. Such setting increases an assembly tolerance.

According to the present invention, a plurality of steering wheels 12 on the end surface of one of the two end portions of the supporting frame 10 are denser than a plurality of steering wheels 12 on the end surface of the other of the two end portions of the supporting frame 10. As shown in FIG. 6, FIG. 6 schematically shows an arrangement of the flexible members 11 on the supporting surface in an embodiment. The flexible members 11 tend to concentrate in a travelling direction or the transfer direction of the flexible member 11. Under the drive of the flexible member 11, the objects may be concentrated toward the middle portion of the supporting surface, so that the objects may be prevented from falling off from the supporting surface. In the embodiment, the grooves 10-2 also disposed to tend to concentrate from one end to the other; the steering wheel 12 is correspondingly disposed so that a spacing between the steering wheels 12 on the end portion of one end of the supporting surface is reduced with respect to a spacing between the steering wheels 12 on the end portion of the other end of the supporting surface.

In the embodiment of the present disclosure, the transfer device may also include a drive shaft 13. The drive shaft 13 may be disposed on a side of the supporting frame 10 opposite to the supporting surface 10-1. In the embodiment shown in FIG. 1, the drive shaft 13 is disposed at a lower portion of the supporting frame 10. The drive shaft 13 also serves as a steering function. As shown in FIG. 1, the plurality of flexible members 11 bypass an outer surface of the drive shaft 13 to be driven by the drive shaft 13. Under a support of the outer surface of the drive shaft 13 and the steering wheel 12, the flexible member 11 forms a loop and may travel along the loop. The right portion of FIG. 1 schematically shows the loop of the flexible member 11. An arrow in FIG. 1 shows the transfer direction. It should be noted that the flexible member 11 may travel in an opposite direction, and the transfer direction may be changed.

According to an aspect of the present disclosure, there is provided an inspection apparatus including the above-mentioned transfer device.

In an embodiment, the inspection apparatus includes an annular inspection device, and the inspection device defines an inspection channel penetrating the inspection device and performing an inspection on objects passing the inspection channel by emitting rays. The inspection device may include, for example, a ray source and a detector (not shown in the drawings). The ray source emits rays toward an object, and the detector detects the rays interacted with the object, so that the inspection of the object may be completed. For example, the inspection device includes an X-ray source which emits rays toward a transferred object on the inspection channel, and the detector detects the rays transmitted through the object, so that an imaging of the object may be completed. The inspection device may also emit X-rays from a plurality of angles to the object in a time-sharing manner, detect the rays transmitted through the object each time, so that a three-dimensional image of the object may be formed by processing a detection signal.

At least a portion of the supporting frame 10 of the transfer device is disposed in the inspection channel. For example, at least a main body portion of the supporting frame 10 is disposed in the inspection channel. Thus, the main body portion of the supporting frame 10 and the flexible member 11 supported on the supporting surface 10-1 are located in the inspection channel.

For example, the inspection apparatus may include an annular structure. The ray source and the detector are disposed on the annular structure, and the annular structure rotates so that the ray source and the detector rotate along a circular trace to inspect the object in the inspection channel, such as building a three-dimensional transmission image of the object. At least a portion of the supporting frame 10 penetrates the annular structure. An inner wall of the annular structure may define a cylindrical shape or other shapes of the channel. An outer wall of the annular structure may have other shapes as required. In an embodiment, the inspection apparatus may be a CT inspection apparatus.

Since the inspection apparatus includes the annular structure, the transfer channel penetrating the annular structure is defined, and the ray source and the detector are disposed on the annular structure. A space of the transfer channel in the annular structure is limited, and the transfer device used to support the object in an existing CT inspection apparatus has a flat surface. A difference is that the supporting surface of the transfer device in the present disclosure is recessed, and thus more objects may be allowed to be placed on the supporting surface and transferred into the transfer channel or inspection channel. Further, since the supporting surface of the transfer device has the recessed shape, the objects placed on the supporting surface are not easy to fall off from the supporting surface.

## Claims

1. A transfer device configured to transfer an object in a first direction, comprising:
a supporting frame (10) having a supporting surface (10-1) extending in the first direction, wherein the supporting surface (10-1) is configured to support a transferred object in a supporting direction;
wherein in a second direction, a region of the supporting surface (10-1) close to a center line is recessed in a direction opposite to the supporting direction with respect to regions of the supporting surface (10-1) close to two sides, wherein the second direction is a transverse direction of the first direction,
wherein the transfer device further comprises a plurality of flexible members (11), wherein each flexible member (11) is supported by the supporting surface (10-1) and is capable of moving around a periphery of the supporting frame (10);
wherein the plurality of flexible members (11) extend on the supporting surface (10-1) in the first direction and are capable of moving in the first direction;
wherein a plurality of steering wheels (12) are disposed on end surfaces of two end portions of the supporting frame (10) and disposed along a profile in the second direction on the end surfaces of the two end portions of the supporting surface (10-1);
wherein on a right side of a lowermost position of the profile of the supporting surface (10-1), the steering wheel (12) is disposed to support a corresponding flexible member (11) on a left side of the flexible member (11); and on a left side of a lowermost position of the profile, the steering wheel (12) is disposed to support a corresponding flexible member (11) on a right side of the flexible member (11);
wherein the transfer device is **characterized in that** the plurality of steering wheels (12) on the end surface of one of the two end portions of the supporting frame (10) are denser than the plurality of steering wheels (12) on the end surface of the other of the two end portions of the supporting frame (10).

2. The transfer device according to claim 1, wherein the plurality of flexible members (11) are spaced with each other in the second direction on the supporting surface (10-1).

3. The transfer device according to claim 1, wherein the supporting surface (10-1) forms an arc surface in the second direction; or
wherein the supporting surface (10-1) comprises a plurality of regions, and an overall cross section of the plurality of regions in the second direction is polygonal.

4. The transfer device according to claim 1, wherein each steering wheel (12) guides a corresponding one of the plurality of flexible members (11) to leave the supporting surface (10-1) in a direction opposite to a normal direction of the supporting surface (10-1) and travel along the end surface of the supporting frame (10).

5. The transfer device according to claim 1, wherein the supporting surface (10-1) comprises a plurality of grooves (10-2), each flexible member (11) is disposed in a corresponding one of the plurality of grooves (10-2), and at least a portion of each of the plurality of flexible members (11) protrudes outside the supporting surface (10-1).

6. The transfer device according to claim 1, further comprising a drive shaft (13) disposed on a side of the supporting frame (10) opposite to the supporting surface (10-1), wherein the plurality of flexible members (11) bypass an outer surface of the drive shaft (13) to be driven by the drive shaft (13).

7. An inspection apparatus, comprising: the transfer device according to any one of the preceding claims.

8. The inspection apparatus according to claim 7, further comprising an inspection device, wherein the transfer device penetrates the inspection device, so that the inspection device rotates around at least a portion of the transfer device so as to obtain a three-dimensional information of an inspected object on the transfer device.

## Patentansprüche

1. Eine Fördereinrichtung, die dazu eingerichtet ist, ein Objekt in einer ersten Richtung zu fördern, umfassend:
einen Tragrahmen (10) mit einer sich in der ersten Richtung erstreckenden Stützfläche (10-1), wobei die Stützfläche (10-1) dazu eingerichtet ist, ein gefördertes Objekt in einer Stützrichtung zu stützen;
wobei in einer zweiten Richtung ein Bereich der Stützfläche (10-1) nahe einer Mittellinie gegenüber Bereichen der Stützfläche (10-1) nahe zwei Seiten entgegengesetzt zur Stützrichtung vertieft ist, wobei die zweite Richtung eine Querrichtung zur ersten Richtung ist,
wobei die Fördereinrichtung ferner eine Vielzahl flexibler Elemente (11) umfasst, wobei jedes flexible Element (11) von der Stützfläche (10-1) getragen wird und in der Lage ist, sich um einen Umfang des Tragrahmens (10) zu bewegen;
wobei sich die Vielzahl flexibler Elemente (11) auf der Stützfläche (10-1) in der ersten Richtung erstreckt und in der Lage ist, sich in der ersten Richtung zu bewegen;
wobei eine Vielzahl von Umlenkrollen (12) an Endflächen von zwei Endabschnitten des Tragrahmens (10) angeordnet ist und entlang eines in der zweiten Richtung verlaufenden Profils der Stützfläche (10-1) an den Endflächen der beiden Endabschnitte angeordnet ist;
wobei auf einer rechten Seite einer untersten Position des Profils der Stützfläche (10-1) die Umlenkrolle (12) derart angeordnet ist, dass sie ein entsprechendes flexibles Element (11) auf einer linken Seite des flexiblen Elements (11) abstützt; und auf einer linken Seite einer untersten Position des Profils die Umlenkrolle (12) derart angeordnet ist, dass sie ein entsprechendes flexibles Element (11) auf einer rechten Seite des flexiblen Elements (11) abstützt;
wobei die Fördereinrichtung **dadurch gekennzeichnet ist, dass** die Vielzahl von Umlenkrollen (12) an der Endfläche eines der zwei Endabschnitte des Tragrahmens (10) dichter ist als die Vielzahl von Umlenkrollen (12) an der Endfläche des anderen der zwei Endabschnitte des Tragrahmens (10).

2. Die Fördereinrichtung nach Anspruch 1, wobei die Vielzahl flexibler Elemente (11) in der zweiten Richtung auf der Stützfläche (10-1) voneinander beabstandet sind.

3. Die Fördereinrichtung nach Anspruch 1, wobei die Stützfläche (10-1) in der zweiten Richtung eine Bogenfläche bildet; oder
wobei die Stützfläche (10-1) eine Vielzahl von Bereichen umfasst und ein Gesamtkurzschnitt der Vielzahl von Bereichen in der zweiten Richtung polygonal ist.

4. Die Fördereinrichtung nach Anspruch 1, wobei jede Umlenkrolle (12) ein entsprechendes der Vielzahl flexibler Elemente (11) derart führt, dass es die Stützfläche (10-1) in einer Richtung verlässt, die einer Normalenrichtung der Stützfläche (10-1) entgegengesetzt ist, und entlang der Endfläche des Tragrahmens (10) verläuft.

5. Die Fördereinrichtung nach Anspruch 1, wobei die Stützfläche (10-1) eine Vielzahl von Nuten (10-2) umfasst, jedes flexible Element (11) in einer entsprechenden der Vielzahl von Nuten (10-2) angeordnet ist und mindestens ein Abschnitt jedes der Vielzahl flexiblen Elemente (11) außerhalb der Stützfläche (10-1) hervorsteht.

6. Die Fördereinrichtung nach Anspruch 1, ferner umfassend eine Antriebswelle (13), die auf einer der Stützfläche (10-1) gegenüberliegenden Seite des Tragrahmens (10) angeordnet ist, wobei die Vielzahl flexibler Elemente (11) eine Außenfläche der Antriebswelle (13) umlaufen, um von der Antriebswelle (13) angetrieben zu werden.

7. Eine Inspektionsvorrichtung, umfassend: die Fördereinrichtung nach einem der vorangehenden Ansprüche.

8. Die Inspektionsvorrichtung nach Anspruch 7, ferner umfassend ein Inspektionsgerät, wobei die Fördereinrichtung das Inspektionsgerät durchdringt, sodass das Inspektionsgerät um zumindest einen Teil der Fördereinrichtung rotiert, um eine dreidimensionale Information eines auf der Fördereinrichtung inspizierten Objekts zu erhalten.

## Revendications

1. Dispositif de transfert conçu pour transférer un objet dans une première direction, comprenant:
un cadre de support (10) comportant une surface de support (10-1) partant dans la première direction, la surface de support (10-1) étant conçue pour supporter un objet transféré dans une direction de support;
dans lequel, dans une deuxième direction, une zone de la surface de support (10-1) proche d'une ligne centrale est évidée dans une direction opposée à la direction de support par rapport aux zones de la surface de support (10-1) proches de deux côtés, la deuxième direction étant une direction transversale de la première direction,
le dispositif de transfert comprenant en outre plusieurs éléments flexibles (11), chaque élément flexible (11) étant soutenu par la surface de support (10-1) et pouvant se déplacer autour d'une périphérie du cadre de support (10);
dans lequel la pluralité d'éléments flexibles (11) s'étendent sur la surface de support (10-1) dans la première direction et peuvent se déplacer dans la première direction;
dans lequel plusieurs roues directrices (12) sont disposées sur les surfaces d'extrémité de deux parties d'extrémité du cadre de support (10) et disposées le long d'un profil dans la deuxième direction sur les surfaces d'extrémité des deux parties d'extrémité de la surface de support (10-1);
dans lequel, du côté droit de la position la plus basse du profil de la surface d'appui (10-1), le volant (12) est disposé de manière à soutenir un élément flexible correspondant (11) sur le côté gauche de l'élément flexible (11) ; et du côté gauche de la position la plus basse du profil, le volant (12) est disposé de manière à soutenir un élément flexible correspondant (11) sur le côté droit de l'élément flexible (11) ;
dans lequel le dispositif de transfert est **caractérisé par le fait que** la pluralité de roues directrices (12) sur la surface d'extrémité de l'une des deux parties d'extrémité du cadre de support (10) est plus dense que la pluralité de roues directrices (12) sur la surface d'extrémité de l'autre des deux parties d'extrémité du cadre de support (10).

2. Dispositif de transfert selon la revendication 1, dans lequel la pluralité d'éléments flexibles (11) sont espacés les uns des autres dans la deuxième direction sur la surface de support (10-1).

3. Dispositif de transfert selon la revendication 1, dans lequel la surface de support (10-1) forme une surface en arc dans la deuxième direction; ou
dans lequel la surface de support (10-1) comprend une pluralité de zones, et une section transversale globale de la pluralité de zones dans la deuxième direction est polygonale.

4. Dispositif de transfert selon la revendication 1, dans lequel chaque roue directrice (12) guide un élément correspondant de la pluralité d'éléments flexibles (11) de manière à ce qu'il quitte la surface de support (10-1) dans une direction opposée à la direction normale de la surface de support (10-1) et se déplace le long de la surface d'extrémité du cadre de support (10).

5. Dispositif de transfert selon la revendication 1, dans lequel la surface de support (10-1) comprend une pluralité de rainures (10-2), chaque élément flexible (11) est disposé dans une rainure correspondante de la pluralité de rainures (10-2), et au moins une partie de chacun de la pluralité des éléments flexibles (11) fait saillie à l'extérieur de la surface de support (10-1).

6. Dispositif de transfert selon la revendication 1, comprenant en outre un arbre d'entraînement (13) disposé sur un côté du cadre de support (10) opposé à la surface de support (10-1), dans lequel la pluralité d'éléments flexibles (11) contourne une surface extérieure de l'arbre d'entraînement (13) pour être entraînée par l'arbre d'entraînement (13).

7. Appareil d'inspection, comprenant: le dispositif de transfert selon l'une quelconque des revendications précédentes.

8. Appareil d'inspection selon la revendication 7, comprenant en outre un dispositif d'inspection, dans lequel le dispositif de transfert pénètre dans le dispositif d'inspection, de sorte que le dispositif d'inspection tourne autour d'au moins une partie du dispositif de transfert afin d'obtenir des informations tridimensionnelles d'un objet inspecté sur le dispositif de transfert.
